# FASCICULE DE BREVET EUROPEEN

(11) **EP 1 014 300 B1**
(45) Date de publication et mention de la délivrance du brevet: **04.07.2007**
(21) Numéro de dépôt: 99410180.6
(22) Date de dépôt: 20.12.1999
(51) Int. Cl.: G06K 19/07

(54) **Modulation capacitive dans un transpondeur électromagnétique**
Kapazitive Modulation in einem elektromagnetischen Transponder
Capacitive modulation in a electromagnetic transponder

(30) Priorité: 21.12.1998 FR 9816383
(43) Date de publication de la demande: 28.06.2000
(73) Titulaire: STMicroelectronics S.A., 92120 Montrouge (FR)
(72) Inventeur: Wuidart, Luc, 83910 Pourrieres (FR); Bardouillet, Michel, 13790 Rousset (FR)
(74) Mandataire: de Beaumont, Michel

(56) Documents cités:
- WO-A-98/11504
- US-A- 5 287 112

## Description

La présente invention concerne le domaine des transpondeurs électromagnétiques, c'est-à-dire des émetteurs-récepteurs (généralement mobiles) susceptibles d'être interrogés sans contact et sans fil par une unité (généralement fixe), dite borne de lecture et d'écriture. La présente invention concerne, plus particulièrement, les transpondeurs dépourvus d'alimentation autonome, c'est-à-dire qui extraient l'alimentation nécessaire aux circuits électroniques qu'ils comportent, du champ haute fréquence rayonné par une antenne de l'unité de lecture et d'écriture. L'invention s'applique à de tels transpondeurs, qu'il s'agisse de transpondeurs à lecture seulement, c'est-à-dire propres à fonctionner avec une borne se contentant de lire les données du transpondeur, ou à des transpondeurs lecture-écriture dont les données qu'ils contiennent peuvent être modifiées par la borne.

Les transpondeurs électromagnétiques sont basés sur l'emploi de circuits oscillants, côté transpondeur et côté unité de lecture-écriture. Ces circuits sont destinés à être couplés par champ magnétique proche lorsque le transpondeur entre dans le champ de l'unité de lecture-écriture un tel transpondeur est décrit dans le document WO-A-98/11504. La portée d'un système à transpondeur, c'est-à-dire la distance maximale de la borne à laquelle un transpondeur est activé (réveillé) dépend, notamment, de la taille de l'antenne du transpondeur, de la fréquence d'excitation de la bobine du circuit oscillant engendrant le champ magnétique, et de l'intensité de cette excitation.

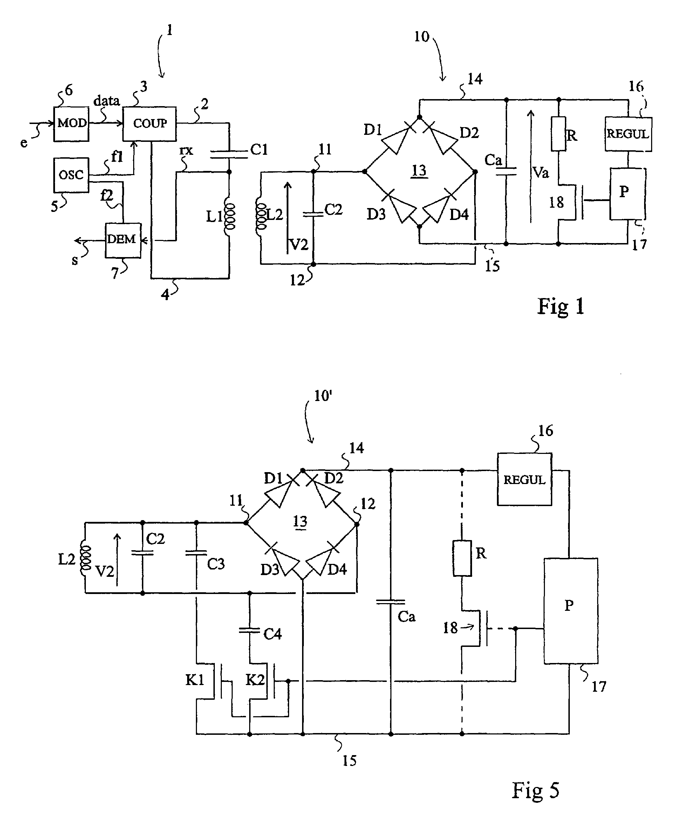

La figure 1 représente, de façon très schématique, un exemple classique de système d'échange de données entre une unité 1 de lecture-écriture et un transpondeur 10.

Généralement, l'unité 1 est essentiellement constituée d'un circuit oscillant formé d'une inductance L1 en série avec un condensateur C1 entre une borne 2 de sortie d'un coupleur d'antenne 3 (COUP) et une borne 4 à un potentiel de référence (généralement, la masse). Le coupleur 3 reçoit un signal f1, issu d'un oscillateur 5 (OSC) et constituant une porteuse haute fréquence. Le signal f1 sert, en l'absence de transmission de données de la borne 1 vers le transpondeur 10, de "source d'énergie" pour activer le transpondeur 10 si celui-ci passe dans le champ. Le cas échéant, un modulateur 6 délivre un signal de données data à partir de données à transmettre, reçues d'une entrée e et provenant d'un système électronique (non représenté).

Le point milieu de l'association en série du condensateur C1 avec l'inductance L1 constitue, dans l'exemple représenté à la figure 1 une borne rx de prélèvement d'un signal de données, reçues d'un transpondeur 10 à destination d'un démodulateur 7 (DEM). Une sortie s du démodulateur communique les données reçues du transpondeur 10 au système électronique de l'unité de lecture-écriture. Le démodulateur 7 reçoit, de l'oscillateur 5, un signal f2 (le plus souvent de même fréquence que le signal f1) pour permettre la démodulation. Le cas échéant, la démodulation est effectuée à partir d'un signal prélevé aux bornes du coupleur d'antenne 3 et non aux bornes de l'inductance L1.

Par l'excitation au moyen du signal f1, l'inductance L1 de l'unité 1 engendre un champ haute fréquence de faible intensité. Côté transpondeur 10, une inductance L2, en parallèle avec un condensateur C2, forme un circuit oscillant (appelé circuit résonnant en réception) parallèle et destiné à capter le champ engendré par le circuit oscillant de l'unité 1. Le circuit résonnant (L2, C2) du transpondeur 10 est accordé sur la fréquence du circuit oscillant (L1, C1) de l'unité 1.

Des bornes 11, 12 du circuit résonnant (correspondant aux bornes du condensateur C2) sont reliées à deux bornes d'entrée alternative d'un pont de redressement 13 constitué, par exemple, de quatre diodes D1, D2, D3, D4. Dans la représentation de la figure 1, l'anode de la diode D1 est connectée à la borne 11, de même que la cathode de la diode D3. L'anode de la diode D2 et la cathode de la diode D4 sont connectées à la borne 12. Les cathodes des diodes D1 et D2 constituent une borne positive 14 de sortie redressée. Les anodes des diodes D3 et D4 constituent une borne de référence 15 de la tension redressée. Un condensateur Ca est connecté en parallèle avec les bornes de sortie redressée 14, 15 du pont 13 de façon à filtrer la tension redressée délivrée par le pont.

Quand le transpondeur 10 se trouve dans le champ de l'unité 1, une tension haute fréquence est engendrée aux bornes du circuit résonnant. Cette tension, redressée par le pont 13 et lissée par le condensateur Ca, fournit une tension d'alimentation Va à des circuits électroniques du transpondeur par l'intermédiaire d'un régulateur de tension 16 (REGUL). Les circuits électroniques du transpondeur ont été symbolisés à la figure 1 par un bloc 17 (P). Il s'agit généralement d'une puce (intégrant le plus souvent le régulateur 16) contenant au moins une mémoire et un processeur.

Pour transmettre des données du transpondeur 10 vers l'unité 1, le bloc 17 commande un étage de modulation (rétromodulation) du circuit résonnant (L2, C2). Cet étage de modulation est généralement constitué d'un interrupteur électronique (un transistor 18) et d'une résistance R, associés en série entre les bornes 14 et 15. Le transistor 18 est commandé à une fréquence nettement inférieure (généralement avec un rapport d'au moins 10) par rapport à la fréquence f1 du signal d'excitation du circuit oscillant de l'unité 1. Le circuit oscillant du transpondeur est donc soumis à un amortissement supplémentaire par rapport à la charge constituée du régulateur 16 et du circuit 17 lorsque l'interrupteur 18 est fermé. La tension baisse aux bornes de l'enroulement L2 de sorte que le transpondeur prélève une quantité d'énergie plus importante du champ haute fréquence. Dans la plage de portée du système, on distingue deux effets de la présence du transpondeur dans le champ. A relativement grande distance (c'est-à-dire sensiblement en limite de portée), le circuit oscillant de la borne fonctionne sans perturbation. A plus faible distance, cela entraîne une augmentation de la charge du circuit oscillant de l'unité 1. Par conséquent, l'amplitude aux bornes de l'inductance L1 diminue. Il y a donc un transfert de la modulation d'amplitude opérée par le transpondeur 10 vers l'unité de lecture-écriture 1 qui peut alors détecter la présence du transpondeur 10 dans son champ.

Une autre méthode consiste à détecter la variation de phase due à ce changement de charge sur le circuit oscillant de l'unité 1.

Différents types de modulation peuvent être utilisés pour les échanges de données entre l'unité 1 et le transpondeur 10. Le plus souvent, on utilise une modulation d'amplitude représentant, soit la totalité de l'amplitude du signal f1, (modulation en tout ou rien), soit une faible portion (de l'ordre de 10%) de cette amplitude en raison du besoin d'alimentation du transpondeur 10. On notera que, quel que soit le type de modulation utilisé (par exemple, modulation de phase, de fréquence) et quel que soit le type de codage des données (NRZ, NRZI, Manchester), la transmission de la modulation s'effectue de façon numérique, par saut entre deux niveaux binaires.

La fréquence d'accord des circuits oscillants conditionne le débit de la transmission dans la mesure où la fréquence de modulation, par l'interrupteur 18 côté transpondeur, doit être nettement inférieure à la fréquence de la porteuse servant à fournir l'alimentation aux transpondeurs. Par conséquent, plus la fréquence de la porteuse d'alimentation est élevée, plus le débit de données peut être important.

Par exemple, en se conformant à une norme ISO 14443 de systèmes de transpondeurs à faible distance (inférieure à une vingtaine de centimètres), la fréquence de la porteuse f1 est de 13,56 MHz et la fréquence des impulsions de commande de l'interrupteur 18, côté transpondeur, est de 847 kHz (16 fois moins).

Les systèmes classiques de transpondeurs tels que décrits ci-dessus souffrent de plusieurs inconvénients.

Un premier inconvénient est que l'on constate des "trous de transmission", c'est-à-dire des distances entre le transpondeur et la borne auxquelles celle-ci ne détecte pas le transpondeur alors même que celui-ci se trouve dans son champ. Ces trous de transmission se produisent lorsque le transpondeur est très proche de l'unité de lecture-écriture, c'est-à-dire lorsque la distance entre les deux éléments L1 et L2 de couplage inductif est faible par rapport à la plage du fonctionnement du système. Par exemple, pour une application aux systèmes à faible distance sous une fréquence de 13,56 MHz, la portée est de l'ordre de 10 centimètres et on voit apparaître des pertes de détection lorsque le transpondeur est à moins de trois centimètres de l'unité de lecture-écriture.

Une solution classique pour résoudre ce problème est de forcer un écart minimal entre le transpondeur et l'unité 1. Toutefois, un inconvénient d'une telle solution est qu'elle réduit d'autant la portée du système.

Un autre inconvénient des systèmes de transpondeurs classiques est que le recours à une résistance R dans l'étage de modulation du transpondeur 10 entraîne une dissipation lors de la modulation par le transpondeur. Or, comme cela a été indiqué précédemment, le transpondeur n'est pas alimenté de façon autonome mais prélève son alimentation du champ haute fréquence provenant du système de lecture-écriture. Par conséquent, toute consommation d'énergie doit être minimisée.

Un objet de la présente invention est de pallier les inconvénients des systèmes à transpondeurs classiques.

La présente invention vise, en particulier, à proposer une nouvelle architecture de transpondeur qui évite les "trous" de transmission tout en préservant la plage de portée maximale au système.

La présente invention vise également à proposer une solution qui soit particulièrement simple à mettre en oeuvre et économe du point de vue des composants utilisés, de façon à favoriser la miniaturisation du transpondeur.

La présente invention vise en outre à minimiser la consommation d'énergie du transpondeur.

La solution préconisée par la présente invention est de recourir, côté transpondeur, à un élément de modulation agissant sur la fréquence de résonance du circuit oscillant et non sur son amplitude comme dans le cas d'une résistance. Ainsi, la présente invention propose de désaccorder légèrement les circuits oscillants lors d'une modulation (rétromodulation) par le transpondeur.

La présente invention tire son origine d'une nouvelle analyse des causes des pertes de transmission dans les systèmes à transpondeurs électromagnétiques.

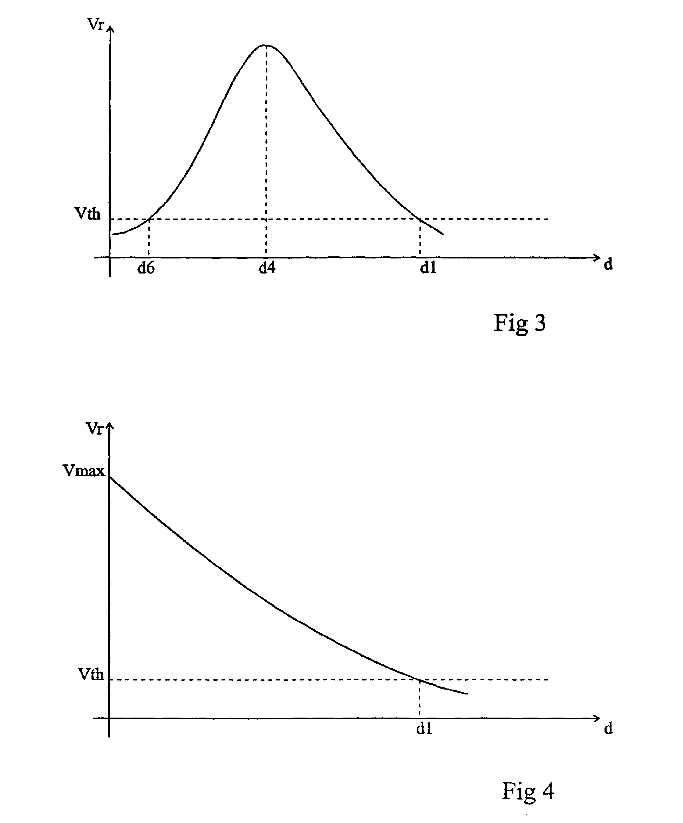

La figure 2 représente, pour plusieurs écarts entre un transpondeur et une unité de lecture-écriture, des exemples de caractéristiques tension-fréquence, où la tension représente la tension de téléalimentation du transpondeur, par exemple, la tension V2 aux bornes de l'inductance L2 du transpondeur, et où f correspond à la fréquence d'excitation du circuit oscillant de la borne.

Les différentes courbes illustrées à la figure 2 sont tracées pour des circuits oscillants accordés sur la position fi, c'est-à-dire la fréquence de résonance des circuits L1, C1 et L2, C2. Les courbes g1, g2, g3, g4, g5 et g6 indiquent des distances décroissantes entre le transpondeur et le système de lecture-écriture. En d'autres termes, la courbe g1 qui représente un petit dôme centré sur la fréquence d'accord fi, correspond sensiblement à la limite de portée du système. On parle de couplage lâche. Plus la distance se réduit, plus le pic du dôme constitué par la caractéristique tension-fréquence augmente, comme l'illustrent les courbes g2, g3 et g4. La courbe g4 illustre la position de couplage optimal, c'est-à-dire la distance à laquelle le couplage est optimisé par une amplitude de téléalimentation maximale reçue par le transpondeur à la fréquence fi. A partir de cette distance, si on rapproche encore le transpondeur de l'unité 1, on constate que l'amplitude de la tension diminue (courbe g5) de plus en plus (courbe g6) au fur et à mesure que l'on se rapproche d'un "contact" entre les deux inductances L1 et L2.

On notera que l'apparition de trous de téléalimentation constatée dans les systèmes classiques ressort des courbes g5 et g6 qui correspondent aux distances les plus réduites entre le transpondeur et le système de lecture-écriture.

Comme l'illustre la figure 2, lorsque la tension V2 se met à diminuer à la fréquence d'accord fi, l'allure de la tension en fonction de la fréquence représente, pour ces distances, deux pics de part et d'autre de la fréquence d'accord reliés l'un à l'autre par un minimum (trou) à la fréquence d'accord. De plus, on constate également que, plus la distance diminue, plus les deux pics s'écartent l'un par rapport à l'autre et plus le minimum est proche d'une tension nulle.

Si les systèmes peuvent parfois être adaptés pour que le transpondeur soit toujours alimenté, c'est-à-dire pour que la faible amplitude suffise au fonctionnement des circuits du transpondeur, cela n'est plus vrai en cas de modulation résistive. En effet, cette modulation a pour effet d'engendrer une chute de tension qui, si elle est combinée à la faible tension liée à la présence d'un trou de téléalimentation, fait que la borne fixe ne peut plus distinguer un changement d'état binaire de la modulation du transpondeur provoquée par une fermeture de l'interrupteur 18, d'une perte de couplage liée à une sortie du transpondeur du champ. De plus, comme la téléalimentation est alors très faible, la dissipation résistive est fortement préjudiciable au maintien d'un fonctionnement correct du transpondeur.

A partir de cette analyse, la présente invention propose d'utiliser une modulation agissant sur la fréquence de résonance du circuit oscillant en modifiant la capacité équivalente du circuit oscillant côté transpondeur. On notera que, en l'absence de rétromodulation par le transpondeur, les circuits oscillants restent accordés, c'est-à-dire avec la même fréquence de résonance. Ainsi, ce n'est que lorsqu'il y a besoin de transmettre des données du transpondeur vers la base que l'on décale légèrement la fréquence de résonance du circuit oscillant du transpondeur de manière à sortir de la zone de "trous" éventuels selon la distance qui sépare le transpondeur de la borne, et permettre ainsi la transmission de données du transpondeur vers la borne.

On notera également que le transpondeur est forcément détecté par la borne dans la mesure où, dans un tel système électromagnétique, le transpondeur commence forcément par une approche depuis la distance de portée lointaine vers une distance plus faible.

La modulation capacitive ne perturbe pas la résonance du point de vue de son amplitude à partir du moment où la faible valeur de la capacité, que l'on rajoute à la capacité du circuit résonant, maintient le couplage dans une zone proche de l'accord. Par conséquent, comme il n'y a plus de chute de tension résistive additionnelle, la téléalimentation est préservée.

La modulation capacitive influence directement la phase de la tension aux bornes de l'inductance L1 de la borne car, par couplage, cette modulation est ramenée sur cette inductance et elle introduit une variation essentiellement sur la partie imaginaire de l'impédance complexe du circuit L1, C1, donc directement sur la phase.

Les figures 3 et 4 illustrent, en fonction de la distance d (écart entre le transpondeur et la borne), les amplitudes Vr du signal récupéré, en sortie s (figure 1) côté borne, suite à des rétromodulations, respectivement résistive et capacitive, pour un système dans lequel les circuits oscillants sont (en l'absence de modulation) accordés.

La figure 3 représente un exemple de caractéristique en rétromodulation résistive. Comme l'illustre cette figure, l'amplitude de la rétromodulation a une forme approximativement en cloche, centrée sur un écart d4 correspondant à un couplage optimal (courbe g4 en figure 2). A des distances importantes, l'amplitude de la rétromodulation est au-dessous d'un seuil Vth de détection par le démodulateur. Cela correspond à la limite dl de portée du système. A de faibles distances (inférieures à d6), l'amplitude est inférieure au seuil Vth de détection de la borne, là où la baisse de tension liée à la modulation se superpose à un trou de téléalimentation.

La figure 4 représente un exemple similaire, mais pour une modulation capacitive. L'allure de la caractéristique amplitude-distance a ici une décroissance approximativement linéaire depuis un maximum Vmax jusqu'à passer au-dessous du seuil Vth de détection lorsque la distance atteint la limite dl de portée du système. Ainsi, les trous de téléalimentation n'ont pas d'effet sur la rétromodulation capacitive.

Un problème qui se pose toutefois est lié à la réalisation pratique d'une telle modulation qui conduit à modifier la capacité équivalente du circuit oscillant.

On notera que si, pour une modulation résistive par diminution de la charge du circuit oscillant, on peut se placer en aval du pont de redressement, cela n'est pas possible dans le cas d'une intervention sur la fréquence de résonance même du circuit oscillant.

Une première solution consisterait à connecter un condensateur en série avec un interrupteur de commande entre les bornes 11 et 12, c'est-à-dire en parallèle sur le condensateur C2 du circuit oscillant.

Une telle solution est inapplicable en pratique en raison du besoin de commande de l'interrupteur à partir du bloc 17 alimenté par la tension redressée Va. En effet, on ne dispose pas d'un potentiel de référence commun entre le circuit oscillant et la tension Va de sorte qu'il n'est actuellement pas possible de commander un tel condensateur entre les bornes 11 et 12 au moyen d'un simple transistor MOS commandé par le bloc 17. En effet, le circuit électronique du transpondeur est alimenté en aval du pont redresseur alors que la capacité du circuit oscillant se trouve en amont de ce pont redresseur.

Ainsi, un objet de la présente invention est de proposer une nouvelle solution permettant une modification de la capacité équivalente du circuit oscillant par des moyens simples.

En particulier, la présente invention vise à permettre la commande, au moyen de simples transistors MOS, d'un moyen de modulation capacitif du circuit oscillant du transpondeur.

La présente invention vise également à ce qu'il ne soit pas nécessaire de modifier le type de commande classique opéré au moyen du circuit (17, figure 1) dans le cas d'un étage de modulation résistif.

Plus particulièrement, la présente invention prévoit un transpondeur électromagnétique selon la revendication 1.

Selon un mode de réalisation de la présente invention, chaque moyen de modulation capacitif est constitué d'un transistor MOS connecté entre une des bornes d'extrémité de l'inductance du circuit oscillant et la borne de référence de la tension continue d'alimentation du circuit électronique, la grille de chaque transistor recevant le signal de modulation émis par le circuit électronique.

Selon un mode de réalisation de la présente invention, chaque transistor constitue un interrupteur de commande d'un condensateur avec lequel il est associé en série, entre une des bornes d'extrémité de l'élément inductif du circuit oscillant et la borne de référence du circuit électronique.

Selon un mode de réalisation de la présente invention, l'élément inductif du circuit oscillant comprend un point milieu constituant le potentiel de référence du circuit électronique.

Selon un mode de réalisation de la présente invention, le transpondeur comporte en outre un moyen de modulation résistive, en parallèle sur un condensateur de filtrage de la tension redressée délivrée par ledit moyen de redressement.

Selon un mode de réalisation de la présente invention, les moyens de modulation capacitive et résistive sont commandés à partir d'un même signal.

Selon un mode de réalisation de la présente invention, le moyen de modulation résistive est commandé à travers un circuit de validation du signal de commande desdits moyens de modulation capacitive.

L'invention concerne également un système de transmission électromagnétique du type comportant une borne de lecture-écriture générant un champ électromagnétique propre à coopérer avec au moins un transpondeur lorsque ce dernier entre dans ce champ.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment représente un exemple classique de système de transmission électromagnétique de type auquel s'applique la présente invention ;
la figure 2 décrite précédemment illustre l'effet de la distance entre deux circuits oscillants accordés, sur la tension récupérée en fonction du couplage magnétique ;
la figure 3 décrite précédemment illustre l'effet de la distance entre deux circuits oscillants accordés, sur la tension récupérée en modulation résistive ;
la figure 4 décrite précédemment illustre l'effet de la distance entre deux circuits oscillants accordés, sur la tension récupérée en modulation capacitive ;
la figure 5 représente un premier mode de réalisation d'un transpondeur électromagnétique selon la présente invention ; et
la figure 6 représente un deuxième mode de réalisation d'un transpondeur électromagnétique selon la présente invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, les constitutions respectives des circuits de commande et de traitement des signaux modulés n'ont pas été détaillées.

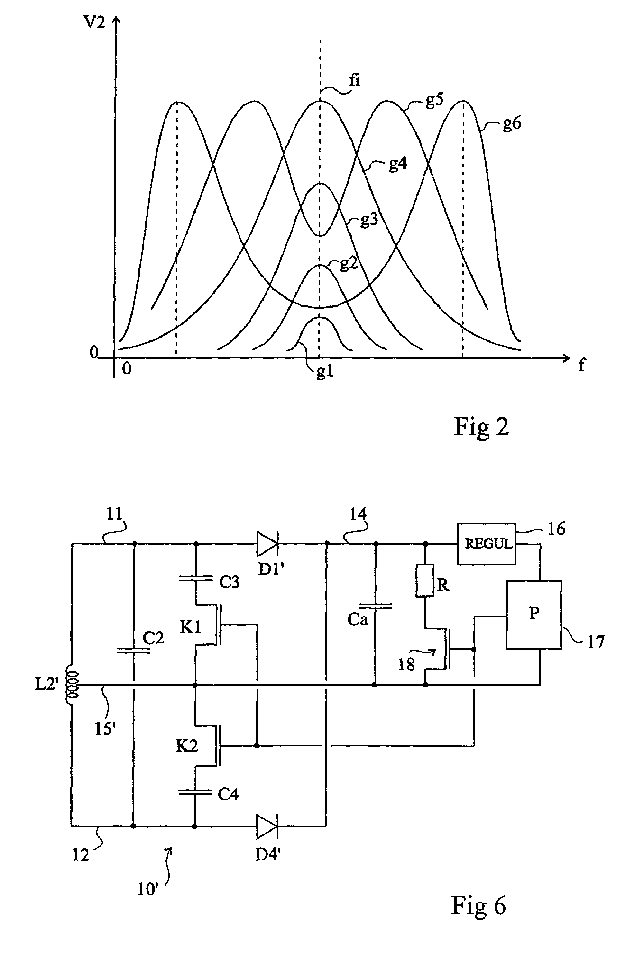

La figure 5 représente un premier mode de réalisation d'un transpondeur 10' selon la présente invention. Comme précédemment, ce transpondeur est constitué à partir d'un circuit oscillant formé d'une inductance L2 et d'un condensateur C2 connectés en parallèle entre deux bornes 11, 12 d'entrée alternative d'un pont 13. Deux bornes de sortie redressée 14, 15 du pont 13 fournissent, par l'intermédiaire d'un condensateur de filtrage Ca, une tension d'alimentation d'un bloc électronique 17, par exemple un processeur P. De façon classique, la tension d'alimentation du bloc 17 est fournie par un circuit régulateur 16 (REGUL). On notera que la régulation illustrée comme étant une régulation de type série peut également être de type parallèle au moyen d'un régulateur connecté entre les bornes 14 et 15.

Selon la présente invention, deux condensateurs de modulation C3 et C4 sont associés, chacun, en série avec un interrupteur (par exemple, un transistor MOS) K1, K2, respectivement entre les bornes 11 et 12 et la borne 15. Ainsi, une première borne du condensateur C3 est connectée à la borne 11 tandis que son autre borne est connectée, par l'intermédiaire du transistor K1, à la borne 15. Une première borne du condensateur C4 est connectée à la borne 12 tandis que son autre borne est connectée, par l'intermédiaire d'un transistor K2, à la borne 15. Ainsi, selon la présente invention, pour effectuer la modulation au moyen du transpondeur 10', on utilise deux capacités respectivement associées à chaque signe de la tension alternative V2. Les deux condensateurs C3 et C4 sont donc de même valeur, appropriée pour effectuer la modulation recherchée. Les deux transistors K1 et K2 sont commandés par le bloc 17, de préférence, à partir d'un même signal.

Comme l'illustre la figure 5, une caractéristique de la présente invention est que, grâce au dédoublement des condensateurs de modulation, on peut disposer d'un point de référence (ligne 15) pour la commande des interrupteurs K1 et K2. Ainsi, si les interrupteurs K1 et K2 sont constitués de transistors MOS à canal N, il est désormais possible, par un signal logique issu du bloc 17, de commander ces interrupteurs en tout ou rien de façon à assurer la modulation nécessaire pour transmettre des données vers la borne de lecture-écriture fixe.

Le cas échéant, on pourra prévoir, dans un transpondeur 10' de la présente invention, un circuit de rétromodulation résistif constitué, comme pour un transpondeur classique, d'une résistance R associée à un interrupteur 18 en série entre les bornes 14 et 15. A la figure 5, l'introduction d'un élément de modulation résistif a été illustrée partiellement en pointillés pour insister sur son caractère optionnel.

Dans le cas où on combine un système de modulation capacitif avec un système de modulation résistif, on notera que les interrupteurs correspondants 18, K1 et K2 peuvent être commandés par un même signal, les sources des transistors MOS correspondants étant toutes référencées à la borne 15. Toutefois, on veillera, de préférence, à interdire la modulation résistive lorsque le transpondeur est dans un trou de téléalimentation. Ainsi, tous les transistors pourront être commandés à partir d'un même signal qui, pour le transistor 18, transitera simplement par un moyen (par exemple, une simple porte logique) non représenté de validation (plus précisément, d'invalidation quand la transpondeur est dans un trou de téléalimentation).

La figure 6 représente un deuxième mode de réalisation d'un transpondeur 10" selon la présente invention. Ce transpondeur 10" reprend sensiblement les mêmes éléments que ceux de la figure 5.

Une caractéristique de ce deuxième mode de réalisation est de prévoir une inductance L2' à point milieu 15'. Ce point milieu sert alors de ligne de référence pour l'alimentation continue du circuit électronique côté transpondeur. Ainsi, une première borne 11 de l'enroulement L2' est connectée à l'anode d'une diode de redressement Dl' dont la cathode constitue la borne 14 d'alimentation du circuit côté transpondeur. Une deuxième borne 12 de l'enroulement L2' est connectée à l'anode d'une diode de redressement D4' dont la cathode est connectée à la borne 14.

Le condensateur C2 est, comme précédemment, connecté entre les bornes 11 et 12. De même, chaque étage de modulation capacitif est respectivement connecté entre les bornes 11 et 15' et entre les bornes 12 et 15'. Ainsi, un premier condensateur C3, associé en série avec un premier interrupteur K1, est connecté entre les bornes 11 et 15' tandis qu'un deuxième condensateur C4, associé en série avec un deuxième interrupteur K2, est connecté entre les bornes 12 et 15'. Les bornes de commande respectives des interrupteurs K1 et K2 (par exemple, les grilles respectives de transistors MOS) sont connectées à une borne de sortie du bloc électronique 17 (par exemple, le processeur du transpondeur).

Comme précédemment, un condensateur de filtrage Ca est connecté entre les bornes 14 et 15' pour filtrer la tension d'alimentation du circuit électronique et, en particulier, alimenter le régulateur 16. Dans l'exemple de la figure 6, on a représenté un étage de modulation résistif constitué d'une résistance R associée en série avec un interrupteur 18 entre les bornes 14 et 15'. On notera toutefois que, comme pour le mode de réalisation de la figure 5, cet étage de modulation résistif est optionnel.

Un avantage du deuxième mode de réalisation est que deux diodes suffisent pour effectuer le redressement nécessaire à l'alimentation du circuit électronique du transpondeur. Toutefois, ce mode de réalisation nécessite une inductance à point milieu. Le choix entre le premier et le second mode de réalisation dépendra de l'application et, en particulier, de la fréquence d'utilisation qui conditionne la taille de l'inductance nécessaire.

Selon un troisième mode de réalisation (non représenté) de la présente invention, les capacités de modulation sont constituées par les capacités intrinsèques de transistors MOS constituant les interrupteurs K1 et K2. Ainsi, selon ce mode de réalisation, on utilise la capacité drain/source de transistors MOS, de sorte que seuls deux transistors MOS sont nécessaires. On économise ainsi l'encombrement des deux condensateurs C3 et C4 des modes de réalisation précédents. Un tel mode de réalisation est possible si les valeurs des capacités, nécessaires à la rétromodulation par le transpondeur, sont compatibles avec les capacités intrinsèques des transistors MOS réalisés. On notera que les signaux de commande devront alors être adaptés, les capacités parasites n'étant fonctionnellement présentes que lorsque les transistors sont bloqués.

Ainsi, à titre d'exemple particulier de réalisation, on pourra choisir, pour les capacités C3 et C4 des valeurs de l'ordre d'une à plusieurs dizaines de picofarads pour une fréquence de porteuse de 13,56 MHz et pour une fréquence de rétromodulation de 847 kHz. De telles capacités sont compatibles avec les valeurs habituelles des capacités intrinsèques de transistors MOS ayant une résistance drain-source à l'état passant de l'ordre d'une centaine d'ohms.

Bien entendu, la présente invention est susceptible de diverses variantes et modifications qui apparaîtront à l'homme de l'art. En particulier, les dimensionnements respectifs des condensateurs, résistances et inductances, ainsi que des autres composants d'un transpondeur selon la présente invention sont à la portée de l'homme du métier en fonction de l'application.

De plus, bien que l'on ait fait référence dans la description qui précède à une modulation capacitive côté transpondeur, un tel type de modulation pourrait être mis en oeuvre par une borne si celle-ci doit transmettre des informations (par exemple, écrire des informations) au transpondeur.

En outre, on notera que la présente invention trouve un intérêt tout particulier dans les systèmes de transmission électromagnétiques fonctionnant à fréquence élevée. En effet, à de telles fréquences, les vitesses de déplacement des transpondeurs par des utilisateurs sont négligeables devant le débit de transmission des informations de sorte que le couplage électromagnétique n'est sensiblement pas modifié pendant un échange d'informations.

## Revendications

1. Transpondeur électromagnétique du type comprenant un circuit oscillant (L2, C2) en amont d'un moyen de redressement (13, D1', D4') propre à fournir une tension continue (Va) d'alimentation d'un circuit électronique (17), ledit circuit électronique comprenant des moyens pour émettre des informations codées numériquement, **caractérisé en ce qu'**il comporte deux moyens (C3, K1, C4, K2) de modulation capacitive de même valeur, respectivement connectés à chaque borne (11, 12) d'extrémité de l'élément inductif (L2, L2') du circuit oscillant, une borne de référence de chaque moyen de modulation étant connectée au potentiel de référence (15, 15') d'alimentation du circuit électronique, en aval du moyen de redressement.

2. Transpondeur selon la revendication 1, **caractérisé en ce que** chaque moyen de modulation capacitif est constitué d'un transistor MOS (K1, K2) connecté entre une des bornes d'extrémité de l'inductance du circuit oscillant et la borne de référence (15, 15') de la tension continue (Va) d'alimentation du circuit électronique (17), la grille de chaque transistor recevant le signal de modulation émis par ledit circuit électronique.

3. Transpondeur selon la revendication 2, **caractérisé en ce que** chaque transistor (K1, K2) constitue un interrupteur de commande d'un condensateur (C3, C4) avec lequel il est associé en série, entre une (11, 12) des bornes d'extrémité de l'élément inductif du circuit oscillant et la borne (15, 15') de référence du circuit électronique (17).

4. Transpondeur selon l'une quelconque des revendications 1 à 3, **caractérisé en ce que** l'élément inductif (L2') du circuit oscillant comprend un point milieu (15') constituant le potentiel de référence du circuit électronique (17).

5. Transpondeur selon l'une quelconque des revendications 1 à 4, **caractérisé en ce qu'**il comporte en outre un moyen de modulation résistive (R, 18), en parallèle sur un condensateur (Ca) de filtrage de la tension redressée (Va) délivrée par ledit moyen de redressement (13, D1', D4').

6. Transpondeur selon la revendication 5, **caractérisé en ce que** lesdits moyens de modulation capacitive (C3, K1, C4, K2) et résistive (R, 18) sont commandés à partir d'un même signal.

7. Transpondeur selon la revendication 6, **caractérisé en ce que** ledit moyen de modulation résistive (R, 18) est commandé à travers un circuit de validation du signal de commande desdits moyens de modulation capacitive (C3, K1, C4, K2).

8. Système de transmission électromagnétique du type comportant une borne (1) de lecture-écriture générant un champ électromagnétique propre à coopérer avec au moins un transpondeur (10') lorsque ce dernier entre dans ce champ, **caractérisé en ce que** le transpondeur est conforme à l'une quelconque des revendications 1 à 7.

## Claims

1. An electromagnetic transponder of the type including an oscillating circuit (L2, C2) upstream of a rectifying means (13, D1', D4') adapted to providing a D.C. supply voltage (Va) to an electronic circuit (17), the electronic circuit including means for transmitting digitally-coded information, **characterized in that** it includes two capacitive modulation means (C3, K1, C4, K2) of a same value, respectively connected with each end terminal (11, 12) of the inductive element (L2, L2') of the oscillating circuit, a reference terminal of each modulation means being connected to the reference supply potential (15, 15') of the electronic circuit, downstream of the rectifying means.

2. The transponder of claim 1, **characterized in that** each capacitive modulation means comprises a MOS transistor (K1, K2) connected between one of the end terminals of the inductance of the oscillating circuit and the reference terminal (15, 15') of the D.C. supply voltage (Va) of the electronic circuit (17), the gate of each transistor receiving the modulation signal transmitted by the electronic circuit.

3. The transponder of claim 2, **characterized in that** each transistor (K1, K2) forms a switch controlling a capacitor (C3, C4) with which it is associated in series, between one (11, 12) of the end terminals of the inductive element of the oscillating circuit and the reference terminal (15, 15') of the electronic circuit (17).

4. The transponder of any of claims 1 to 3, **characterized in that** the inductive element (L2') of the oscillating circuit includes a midpoint (15') forming the reference potential of the electronic circuit (17).

5. The transponder of any of claims 1 to 4, **characterized in that** it further includes a resistive modulation means (R, 18), in parallel with a capacitor (Ca) for filtering the rectified voltage (Va) provided by the rectifying means (13, D1', D4').

6. The transponder of claim 5, **characterized in that** said capacitive (C3, K1, C4, K2) and resistive (R, 18) modulation means are controlled with a same signal.

7. The transponder of claim 6, **characterized in that** said resistive modulation means (R, 18) is controlled through a circuit for enabling the control signal of the capacitive modulation means (C3, K1, C4, K2).

8. A system of electromagnetic transmission of the type including a read/write terminal (1) generating an electromagnetic field adapted to cooperating with at least one transponder (10') when the latter enters this field, **characterized in that** the transponder conforms to any of claims 1 to 7.

## Patentansprüche

1. Ein elektromagnetischer Transponder von dem Typ, der Folgendes aufweist: eine Oszillatorschaltung (L2, C2), die Gleichrichtmitteln (13, D1', D4') vorgeschaltet ist, die angepasst sind zum Vorsehen einer D C - bzw Gleichstromversorgungsspannung (Va) für eine elektronische Schaltung (17), wobei die elektronische Schaltung Mittel aufweist zum Übertragen bzw. Senden von digitalcodierter Information, **dadurch gekennzeichnet, dass** sie zwei kapazitive Modulationsmittel (C3, K1, C4, K2) mit einem gleichen Wert aufweist, die entsprechend mit jedem Endterminal bzw Endanschluss (11, 12) des induktiven Elements (L2, L2') von der Oszillatorschaltung verbunden sind, wobei ein Bezugs- bzw Referenzanschluss von jedem Modulationsmittel mit dem Referenzversorgungspotential (15, 15') von der elektronischen Schaltung verbunden ist, und zwar den Gleichrichtmitteln nachgeschaltet

2. Transponder nach Anspruch 1, **dadurch gekennzeichnet, dass** jedes kapazitive Modulationsmittel einen MOS Transistor (K1, K2) aufweist, der zwischen einem der Endanschlüsse von der Induktanz der Oszillatorschaltung und dem Referenzanschluss (15, 15') der Gleichstromversorgungsspannung (Va) von der elektronischen Schaltung (17) verbunden ist, wobei das Gate bzw. Gatter von jedem Transistor das von der elektronischen Schaltung übertragene Modulationssignal empfängt.

3. Transponder nach Anspruch 2, **dadurch gekennzeichnet, dass** jeder Transistor (K1, K2) einen Schalter bildet, der einen Kondensator (C3, C4) steuert mit dem er seriell assoziiert ist, und zwar zwischen Einem (11, 12) von den Endanschlüssen von dem induktiven Element von der Oszillatorschaltung und dem Referenzanschluss (15, 15') von der elektronischen Schaltung (17).

4. Transponder nach irgendeinem der Ansprüche 1 bis 3, **dadurch gekennzeichnet, dass** das induktive Element (L2') von der Oszillatorschaltung einen Mittenpunkt (15') aufweist, der das Referenzpotential der elektronischen Schaltung (17) bildet

5. Transponder nach irgendeinem der Ansprüche 1 bis 4, **dadurch gekennzeichnet, dass** er ferner Widerstandsmodulationsmittel (R, 18) aufweist, die parallel gestaltet sind mit einem Kondensator (Ca) zur Filterung der gleichgerichteten Spannung (Va), die durch die Gleichrichtmittel (13, D1', D4') vorgesehen ist

6. Transponder nach Anspruch 5, **dadurch gekennzeichnet, dass** die kapazitiven (C3, K1, C4, K2) Modulationsmittel und die Widerstands- (R, 18) -Modulationsmittel mit einem gleichen Signal gesteuert werden.

7. Transponder nach Anspruch 6, **dadurch gekennzeichnet, dass** die Widerstandsmodulationsmittel (R, 18) durch eine Schaltung gesteuert werden zum Freigeben bzw Aktivieren (enabling) des Steuersignals von den kapazitiven Modulationsmitteln (C3, K1, C4, K2).

8. Ein System zur elektromagnetischen Übertragung von dem Typ, der Folgendes aufweist: ein Lese-/Schreibterminal (1), das ein elektromagnetisches Feld erzeugt und zwar angepasst zum Kooperieren mit mindestens einem Transponder (10') wenn der letztere in dieses Feld eintritt, **gekennzeichnet dadurch, dass** der Transponder irgendeinem der Ansprüche 1 bis 7 entspricht.
